# EUROPÄISCHE PATENTSCHRIFT

(11) **EP 2 952 295 B1**
(45) Veröffentlichungstag und Bekanntmachung des Hinweises auf die Patenterteilung: **28.03.2018**
(21) Anmeldenummer: 15166320.0
(22) Anmeldetag: 05.05.2015
(51) Int. Cl.: F16B 21/02, B25B 1/24, B25H 1/08, F16B 17/00

(54) **VORRICHTUNG ZUR HALTERUNG EINES WERKSTÜCKS AN EINER WERKPLATTE**
DEVICE FOR HOLDING A WORKPIECE ON A PLATE
DISPOSITIF DE FIXATION D'UNE PIÈCE USINÉE SUR UNE PLATINE

(30) Priorität: 16.05.2014 DE 102014106962
(43) Veröffentlichungstag der Anmeldung: 09.12.2015
(73) Patentinhaber: Wolfcraft GmbH, 56746 Kempenich (DE)
(72) Erfinder: Ebert, Winfried, 56745 Weibern (DE); Fronczak, Christof, 56754 Dünfus (DE); Krämer, Patrick, 53520 Müllenbach (DE)
(74) Vertreter: Grundmann, Dirk

(56) Entgegenhaltungen:
- DE-U1- 29 820 633
- GB-A- 2 377 904
- US-A1- 2010 230 882
- "The big green book", 2008, norelem Normelemente KG, Markgröningen, XP055219242, Bd. 2008, Seiten 140-142, * Seite 141 - Seite 142 *

## Beschreibung

Die Erfindung betrifft eine Vorrichtung gemäß Gattungsbegriff des Anspruchs 1 mit einem Abstützkörper und einen Abstützkörper zur Verwendung mit einem Haltekörper der Vorrichtung.

Die Veröffentlichung "The big green book", 1. Januar 2008 (2008-01-01), norelem Normelemente KG, Markgröningen, XP055219242, Bd. 2008, Seiten 140-142 zeigt verstellbare Stützen, in die Einsätze aus Stahl einsteckbar sind, wobei die Einsätze verschieden gestaltete Abstützköpfe aufweisen.

Die US 2010/0230882 A1 beschreibt zwei an einem Werktisch befestigbare Spannpratzen. Aus der GB 2 377 904 A und der DE 298 20 633 U1 sind jeweils Halteblöcke vorbekannt, die einen Schaft besitzen, der in eine Öffnung einer Werkplatte eingesteckt werden kann.

Auch die DE 203 04 531 U1 beschreibt einen Spannklotz

Der aus Kunststoff bestehende Spannklotz besitzt einen im Wesentlichen quaderförmigen Haltekörper, von dem ein Hohlschaft ausgeht. Dieser Hohlschaft besitzt an seinem freien Ende durch Freischnitte erzeugte Zungen. An der Zungenaußenwand befinden sich Auswölbungen. Wird der Hohlschaft in eine durchmesserangepasste Bohrung einer Werkplatte eingesteckt, so federn die Zungen radial einwärts. Die Auswölbungen liegen somit federvorgespannt an der Wandung der Bohrung an. Auf dem Haltekörper können Werkstücke abgelegt werden. Sie liegen dann im Wesentlichen flächig auf der von der dem Schaft zugeordneten Seite des Haltekörpers weg weisenden Seite auf.

Die DE 199 10 511 A1 beschreibt eine Vorrichtung zur verspannenden Verbindung von mit Abstand zueinander liegenden Bauteilen, wobei ein Hohlschaft eines Distanzelementes in eine Bohrung eingreift. Durch Eindrehen einer Schraube können die vom Hohlschaft gebildeten Zungen in eine klemmende Anlage an die Wandung der Bohrung gebracht werden.

Der Erfindung liegt die Aufgabe zugrunde, eine Vorrichtung der eingangs beschriebenen Art gebrauchsvorteilhaft weiterzubilden.

Gelöst wird die Aufgabe durch die im Anspruch 1 angegebenen technischen Merkmale. Die Unteransprüche stellen vorteilhafte Weiterbildungen der Erfindung dar.

Zunächst und im Wesentlichen ist vorgeschlagen, dass die Breitseitenfläche des Haltekörpers, die vom Schaft weg weist, eine Öffnung aufweist. Die Öffnung kann sich dabei koaxial zur Achse des Schaftes erstrecken. In dieser Öffnung steckt ein Abstützkörper, in dem die Öffnung einen unrunden Grundriss, insbesondere einen elliptischen oder ovalen Grundriss aufweist, kann ein in die Öffnung hineinragender Klemmabschnitt des Abstützkörpers durch Verdrehen in eine Klemmstellung zur Wandung der Öffnung gebracht werden. Hierzu besitzt der Klemmabschnitt Klemmflanken. Der Abstützkörper und der ihn aufnehmende Haltekörper kann die folgenden optionalen Eigenschaften aufweisen: Der Abstützkörper besitzt zwei voneinander weg weisende Abstützenden. Durch Umwenden des Abstützkörpers um 180 Grad kann entweder das eine Abstützende oder das andere Abstützende vom Haltkörper weg weisen. Das jeweils andere Abstützende steckt dann in der Öffnung. Bevorzugt sind die beiden Abstützenden voneinander verschieden ausgebildet. Ein Abstützende kann eine Spitze ausbilden. Die Spitze kann von einem kegelförmigen Endabschnitt ausgebildet sein. Das andere Abstützende kann eine Abstützfläche ausbilden. Bevorzugt ist die Abstützfläche aus Weichkunststoff und wird von einem Stopfen ausgebildet, der in einer Höhlung des Abstützkörpers steckt. Der Stopfen kann aus einem Weichkunststoff gefertigt sein. Auf mehrere derartige Vorrichtungen, die jeweils in einer Öffnung einer Werkplatte einstecken, kann ein Werkstück abgelegt werden. Das Werkstück kann dabei beispielsweise entweder nur auf Abstützflächen abgelegt werden, so dass es oberflächenschonend gehaltert ist. Es kann aber auch nur auf Spitzen aufgelegt werden. Dies ist insbesondere dann von Vorteil, wenn die Oberfläche lackiert worden ist und die Lackschicht trocknen soll. Dann hinterlassen die Abstützenden nur kaum wahrnehmbare Eindrücke in der behandelten Oberfläche. Sowohl der die Öffnung und den Schaft ausbildende Haltekörper als auch der Abstützkörper können aus Kunststoff gefertigt sein. Der Abstützkörper kann einen Auflageabschnitt, beispielsweise in Form eines Bundes aufweisen. Im Bereich des Auflageabschnittes hat der Abstützkörper bevorzugt eine kreisrunde Umrisskontur. Der den Auflageabschnitt ausbildende Bund kann zwei voneinander weg weisende Breitseitenflächen aufweisen, die wahlweise auf der vom Schaft weg weisenden Oberseite des Haltekörpers aufliegen können. Der Klemmabschnitt schließt sich unmittelbar an den Auflageabschnitt an. Jedem der beiden voneinander weg weisenden Breitseiten des Auflageabschnittes ist ein Klemmabschnitt zugeordnet. Der Klemmabschnitt steckt in der Öffnung und kann durch Drehen in eine Klemmstellung gebracht werden. Der Klemmabschnitt bildet die Klemmflanken aus, die in eine Klemmanlage an die Innenwandung der Öffnung antreten. Hierzu kann der Klemmabschnitt eine Umrisskontur aufweisen, die der Umrisskontur der Öffnung entspricht. Beispielsweise kann der Klemmabschnitt von radial abragenden Rippen ausgebildet sein. Der Klemmabschnitt kann von vier Rippen ausgebildet sein, wobei sich zwei kurze Rippen gegenüberliegen und zwei lange Rippen gegenüberliegen. Durch Drehen des Abstützkörpers können die langen Rippen in eine Klemmlage gegen die Wandungsabschnitte der Öffnung gebracht werden, die durch eine kleine Halbachse voneinander beabstandet sind. Beim Einstecken des Klemmabschnittes in die Öffnung liegen die Klemmflanken bzw. die langen Rippen in Richtung der großen Halbachse der Öffnung. Der Abstützkörper besitzt einen Zylinderabschnitt, dessen Durchmesser im Wesentlichen dem Durchmesser des Schaftes des Haltekörpers entspricht. Als Folge dieser Ausgestaltung kann der Zylinderabschnitt des Abstützkörpers in eine Bohrung der Werkplatte eingesetzt werden. Es reicht grundsätzlich aus, wenn ein Abschnitt des Abstützkörpers dem Durchmesser der Öffnung entspricht. Beispielsweise können die radial abragenden Rippen derart ausgebildet sein, dass der Abstützkörper damit in die Öffnung einsteckbar ist. Die Rippen liegen dann an der Innenwandung der Öffnung an. Die Öffnungen in der Werkplatte haben typischerweise einen Durchmesser von 20 mm. Dementsprechend besitzt der Schaft des Haltekörpers einen Durchmesser von 20 mm und der Zylinderabschnitt des Abstützkörpers einen maximalen Durchmesser von 20 mm. Die axiale Länge des Abstützkörpers ist dabei derart an die Höhe des Haltekörpers angepasst, dass die Auflagefläche des Haltekörpers die Oberseite der Werkplatte um dasselbe Maß überragt, wie die Abstützfläche des in die Öffnung eingesteckten Abstützkörpers.

Der Schaft kann ein Hohlschaft sein mit Zungen, die mittels eines im Schaft angeordneten Spreizkörpers in Radialrichtung nach außen abspreizbar sind. Der Spreizkörper ist dabei in die vom Haltekörper weg weisende Öffnung des Schaftes eingesteckt. Der Spreizkörper kann einen Gewindeabschnitt aufweisen, der in eine Einschraubhöhlung des Haltekörpers eingeschraubt ist. Durch ein axiales Verdrehen des Spreizkörpers, welches beispielsweise mit Hilfe eines Schraubwerkzeuges vorgenommen werden kann, das in eine Schraubwerkzeugeingriffsöffnung des Spreizkörpers eingebracht wird, kann der Spreizkörper in Achsrichtung gegenüber den Spreizzungen verlagert werden. Die Spreizzungen bilden bevorzugt Schrägflanken aus. Die Schrägflanken erstrecken sich auf Abschnitten eines Innenkegelstumpfes. An den Schrägflanken können schräg verlaufende Spreizflanken des Spreizkörpers anliegen. Die Spreizflanken liegen vorzugsweise in Flächenanlage an den Schrägflanken an. Die Spreizflanken verlaufen somit vorzugsweise auf Abschnitten einer Kegelstumpfmantelfläche. Die äußersten Endabschnitte der Zungen, die von Freischnitten ausgebildet sein können, können eine Zone größten Durchmessers aufweisen. Diese Zone kann den bspw. von einem Schraubenkopf ausgebildeten Spreizkörper vollständig aufnehmen, ohne dass eine Spreizung der Spreizzungen erfolgt. In diesem Zustand, in dem die Spreizflanken flächig aber drucklos an den Schrägflanken anliegen, kann der Schaft in die Öffnung der Werkplatte eingesetzt werden. Von unten erfolgt dann mit einem Schraubendreher das Verdrehen des Spreizkörpers, wobei sich der Gewindeabschnitt in die Einschraubhöhlung hineinschraubt. Einhergehend mit dieser Axialverlagerung werden die Spreizzungen radial nach außen gespreizt und üben eine Klemmkraft auf die Wandung der Werkplattenbohrung aus. Die Einschraubhöhlung kann sich bis über die Ebene erstrecken, die von der Seite des Haltekörpers ausgebildet ist, die auf der Werkplatte aufliegt.

Die Erfindung betrifft ferner einen Abstützkörper, der einen Einsteckabschnitt in Form eines Zylinderabschnitts aufweist, der in eine Öffnung der Werkplatte einsetzbar ist. Erfindungsgemäß besitzt der Abstützkörper zwei voneinander weg weisende Zylinderabschnitte, die wahlweise in die Öffnung einsteckbar sind. Die Stirnseiten der Zylinderabschnitte sind unterschiedlich ausgestaltet. Eine Stirnseite bildet eine Abstützfläche und die gegenüberliegende Stirnseite eine Abstützspitze aus. Bevorzugt überragt die Spitze die Werkplatte um dasselbe Höhenmaß wie die Abstützfläche.

Ein Ausführungsbeispiel der Erfindung wird nachfolgend anhand beigefügter Zeichnungen erläutert. Es zeigen:
- Figur 1:: in perspektivischer Darstellung eine Werkplatte mit vier darauf angebrachten Haltevorrichtungen, wobei zwei Haltevorrichtungen in einer Explosionsdarstellung dargestellt sind,
- Figur 2:: den Schnitt gemäß der Linie II - II in Figur 1,
- Figur 3:: den Schnitt gemäß der Linie III - III in Figur 1, jedoch mit umgewendetem Abstützkörper,
- Figur 4:: eine Explosionsdarstellung der Haltevorrichtung,

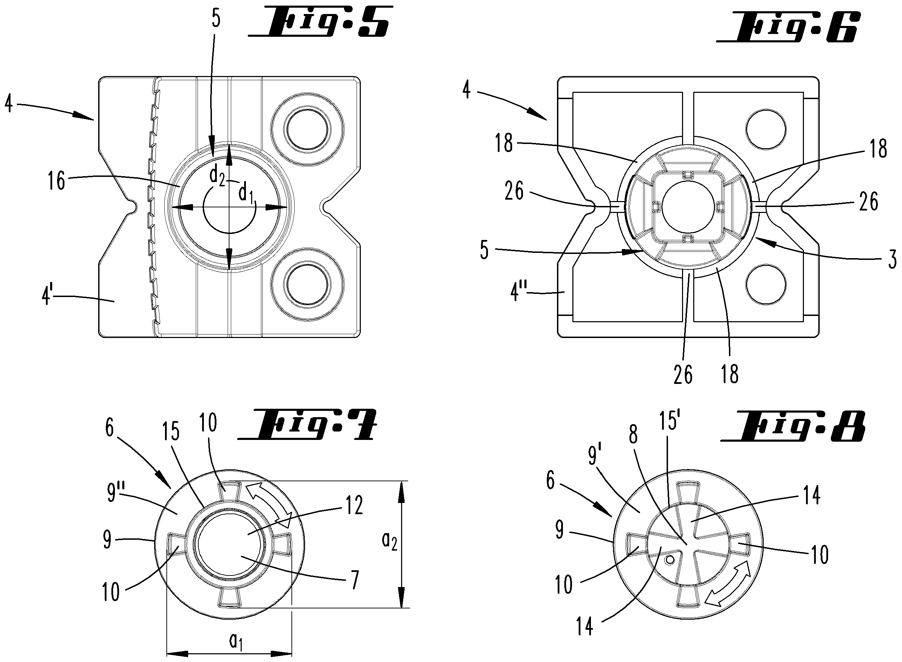

- Figur 5:: eine Draufsicht auf den Haltekörper,
- Figur 6:: eine Unteransicht des Haltekörpers,
- Figur 7:: eine Draufsicht auf die ebene Abstützfläche des Abstützkörpers,
- Figur 8:: eine Draufsicht auf die Abstützspitze des Abstützkörpers und
- Figur 9:: eine Schnittdarstellung durch die Haltevorrichtung,
- Figur 10:: einen Spanntisch mit zwei Spannbacken, von denen eine bewegliche Spannbacke gegen eine feste Spannbacke verstellt werden kann mit einem Untergestell. Die rückwärtige Spannbacke trägt Haltekörper ohne darin einsteckende Abstützkörper und Abstützkörper, die unmittelbar in eine Bohrung der Spannbacke einstecken.

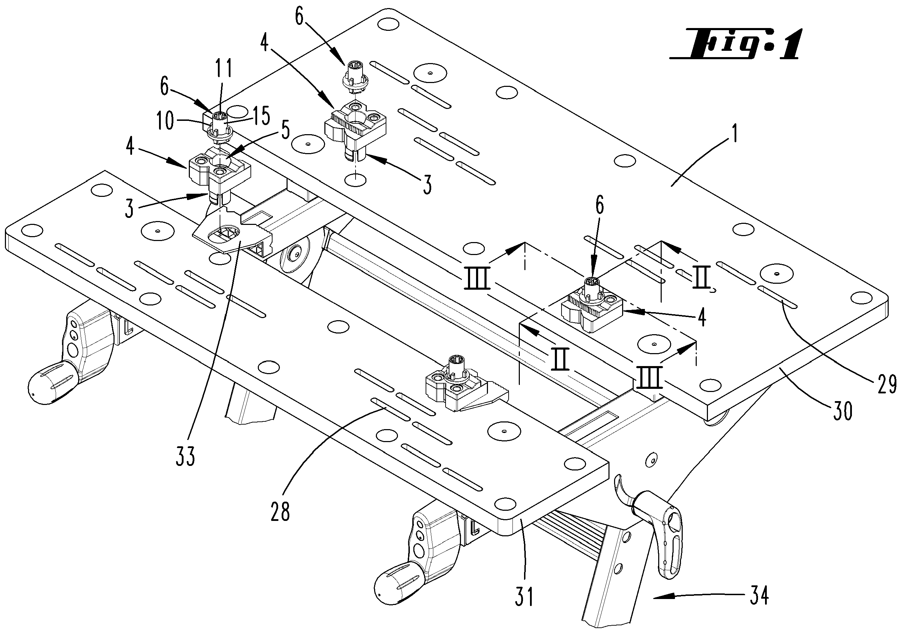

Die mit der Bezugsziffer 1 bezeichnete Werkplatte erstreckt sich in einer Horizontalebene und besitzt eine Vielzahl von sich in Vertikalrichtung erstreckender Bohrungen 2. Die Bohrungen haben einen Durchmesser von etwa 20 mm. In die in Figur 1 dargestellte Werkplatte sind an insgesamt vier Stellen jeweils in eine Bohrung Haltevorrichtungen eingesetzt, die im Folgenden im Detail beschrieben werden.

In eine Bohrung 2 ist der Hohlschaft 3 einer Haltevorrichtung eingesteckt. Der Hohlschaft 3 ist materialeinheitlich mit einem Haltekörper 4 verbunden. Der Haltekörper 4 besteht aus einem Kunststoff und hat eine im Wesentlichen quaderförmige Gestalt. Zumindest besitzt der Haltekörper 4 aber eine Unterseite 4", die auf der nach oben weisenden Oberseite der Werkplatte 1 aufliegt und eine Oberseite 4', die von der Werkplatte 1 und vom Schaft 3 weg weist.

In der Oberseite 4' des Haltekörpers 4 befindet sich eine Öffnung 5. Die Öffnung hat einen unrunden Querschnitt. Sie ist elliptisch. Sie besitzt eine große Halbachse d₁, die länger ist als eine kleine Halbachse d₂. Die Öffnung 5 setzt sich bis in einen ringförmigen Boden 16 fort, der eine zentrale, kreisförmige Vertiefung 17 umgibt. Der Boden der Vertiefung 17 geht in eine Einschraubhöhlung 22 über. An die Einschraubhöhlung 22 schließt sich wiederum die Höhlung des Hohlschaftes 3 an. Diese besitzt Schrägflanken 19, die auf der Innenfläche eines Kegelstumpfes verlaufen. An die Schrägflanken 19 schließt sich eine Zone 24 des größten Durchmessers an. Die Schrägflanken 19 sind Abschnitte von Zungen 18, die durch Freischnitte 26 gebildet sind. Die Freischnitte münden in das freie Ende des Hohlschaftes 3.

In der Öffnung 5 steckt ein Einsteckabschnitt eines Abstützkörpers 6. Der Abstützkörper 6 besitzt einen mittleren, durchmessergrößten Auflageabschnitt 9. Der Auflageabschnitt 9 hat eine kreisrunde Umfangskontur und besitzt voneinander weg weisende Seitenflächen 9', 9", die wahlweise auf der Oberseite 4' des Haltekörpers 4 aufliegen können.

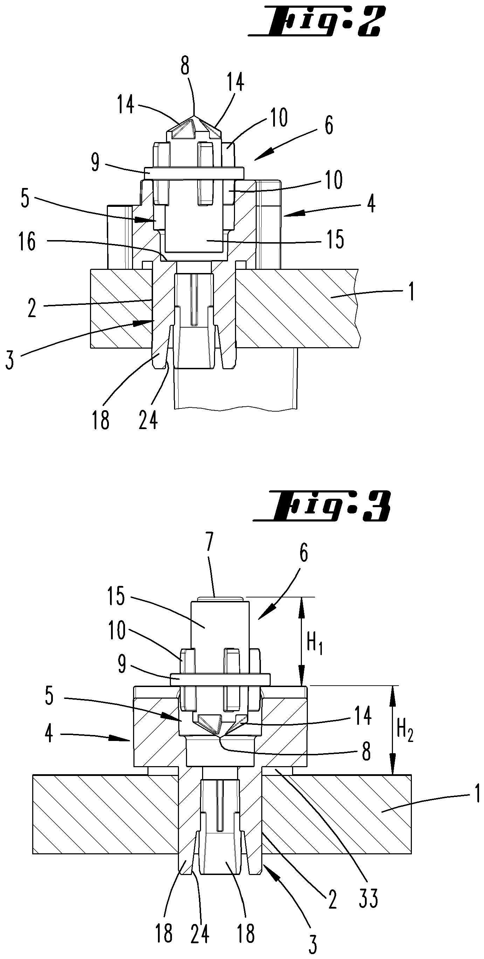

Von jeder der beiden Seiten 9', 9" ragt ein Abstützorgan des Abstützkörpers 6 ab. Das Abstützorgan wird von einem Zylinderabschnitt 15 und von einem Zylinderabschnitt 15' ausgebildet. Die beiden Enden der Zylinderabschnitte 15, 15' bilden jeweils Abstützenden 7, 8 aus. Die beiden Abstützenden 7, 8 sind voneinander verschieden ausgebildet. Das dem Zylinderabschnitt 15' zugeordnete Ende 8 bildet eine Abstützspitze aus. Diese Abstützspitze wird von zu einer Spitze zulaufenden Rippen 14 gebildet. Im Wesentlichen handelt es sich bei der Abstützspitze 8 um eine kegelförmige Anordnung. Weist die Abstützspitze 8 nach oben, in dem die Seite 9" des Auflageabschnittes 9 auf der Seite 4' des Haltekörpers 4 aufliegt (siehe Figur 2), so kann auf die Spitze 8 ein Werkstück aufgelegt werden. Der zylindrische Abschnitt 15' ragt dann nach oben und der zylindrische Abschnitt 15 nach unten. Die Abstützfläche 7 steckt dann in der Öffnung 5 und insbesondere in der Vertiefung 17.

Der Abstützkörper 6 kann in eine Klemmhaltelage zum Haltekörper 4 gebracht werden. Hierzu besitzt der Abstützkörper 6 auf jeder der beiden Seiten 9', 9" des Auflageabschnittes 9 einen Klemmabschnitt 10. Der Klemmabschnitt 10 wird von insgesamt vier Rippen ausgebildet. Zwei längere Rippen besitzen voneinander weg weisende Klemmflanken, deren Abstand a₁ ist. Zwei kürzere Rippen besitzen voneinander weg weisende Seitenflanken, deren Abstand a₂ beträgt und kürzer ist als der Abstand a₁.

Die Öffnung 5 hat eine Ovalform mit einer großen Halbachse d₁, die geringfügig größer ist als der Abstand a₁, also der Abstand der beiden Klemmflanken der längeren Rippen 10. Die kurze Halbachse d₂ der Öffnung 5 ist geringfügig länger als der Abstand der beiden voneinander weg weisenden Seiten der kürzeren Rippen, also als der Abstand a₂. Die kurze Halbachse ist aber kürzer als der Abstand der beiden Klemmflanken, also der Abstand a₁.

Wird der so ausgebildete Klemmabschnitt 10 in die Öffnung 5 eingesteckt, wobei die längeren Rippen 10 parallel zur großen Halbachse verlaufen, so liegt der Klemmabschnitt 10 mit radialem Spiel in der Öffnung 5 ein. Wird der Abstützkörper 6 um seine Achse gedreht, so treten die von den Seitenflächen der längeren Rippen 10 ausgebildeten Klemmflanken in klemmender Anlage gegen die Wandung der Öffnung 5.

In einer zweiten Betriebsart kann die Abstützfläche 7 nach oben weisen (siehe Figur 3). Hierzu steckt der zylindrische Abschnitt 15' mit dem ihm zugeordneten Klemmabschnitt und der Abstützspitze 8 in der Öffnung 5. Die Abstützspitze 8 bzw. die der sie ausbildende Kegel steckt in der Vertiefung 17.

Die beiden zylindrischen Abschnitte 15, 15' werden von einem Hohlkörperabschnitt mit einer Höhlung 11 ausgebildet, die innere Rippen 13 ausbildet. Die Höhlung 11 erstreckt sich von einer Öffnung, die mit einem Stopfen 12 verschlossen ist bis zu dem die Spitze 8 ausbildenden Kegelende. Die Höhlung 11 erstreckt sich also durch den Ringabschnitt 9 hindurch.

Der Stopfen 12 besitzt eine ebene, flächige Stirnseite, die die Abstützfläche 7 ausbildet. Der Stopfen kann aus einem Weichkunststoff gefertigt werden. Der die Abstützfläche 7 ausbildende Kopfbereich des Stopfens 12 ragt über die Randkante der Höhlung 11.

Auch in dieser Betriebsart kann der Abstützkörper durch eine Drehung in eine Klemmlage gebracht werden.

Die Figur 3 zeigt, dass die Abstützfläche 7 des Abstützkörpers 6 den Rand der Öffnung 5 bzw. die Oberseite des Haltekörpers 4 um ein Höhenmaß H₁ überragt. Das Maß der Höhe H₁ entspricht dem Maß der Höhe H₂, um das die Oberseite des Haltekörpers 4 die Oberseite der Werkplatte 1 überragt. Es ist ferner vorgesehen, dass der Durchmesser des Umkreises um den Klemmabschnitt 10 in etwa dem Durchmesser des Schaftes 3 entspricht, so dass der Zylinderabschnitt 15 in eine der Bohrungen 2 der Werkplatte 1 einsetzbar ist. Dann liegt die Oberseite des Haltekörpers 4 auf demselben Höhenniveau wie die Abstützfläche 7 des Abstützkörpers 6.

Zwischen der Werkplatte 1 und der Unterseite des Haltekörpers 4 befindet sich ein Befestigungsabschnitt einer Hilfsbacke 33. Bei diesem Ausführungsbeispiel bzw. bei dieser Konfiguration ist die Höhe des Haltekörpers 4 somit etwas geringer als das Maß H₂. In einer davon abweichenden Konfiguration bzw. Ausgestaltung kann die Höhe des Haltekörpers 4 aber exakt dem Maß H₂ entsprechen.

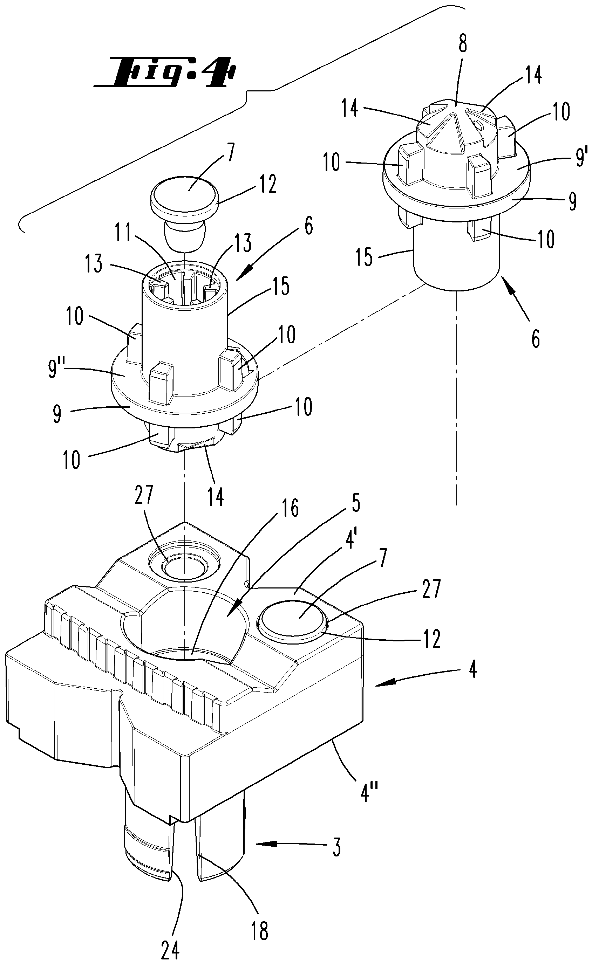

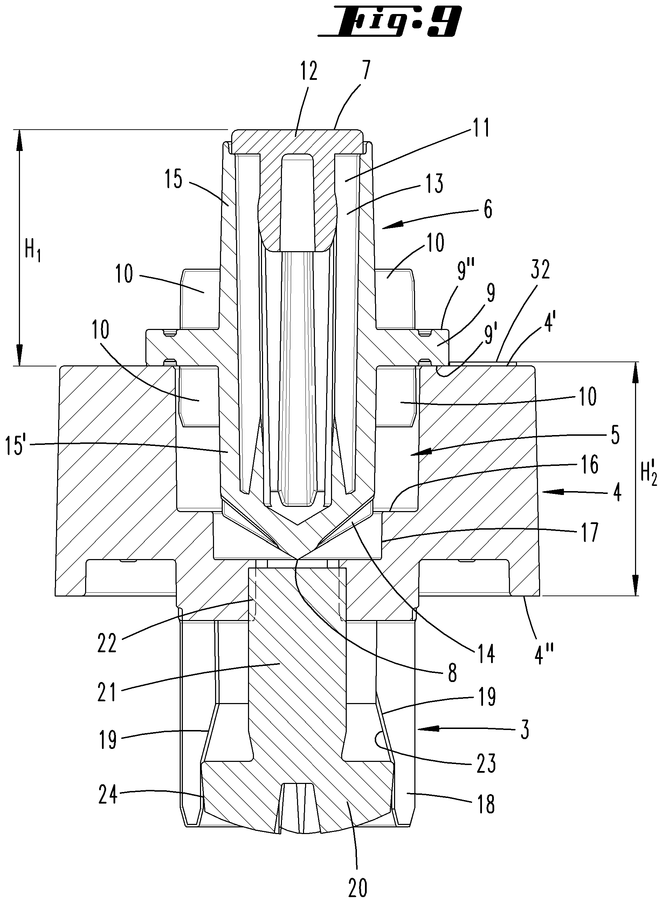

Die Figuren 4 und 9 zeigen, dass in ein oder mehrere Öffnungen 27 der Oberseite 4' des Haltekörpers 4 Weichkunststoffstopfen 12 einsteckbar sind, die mit einer Stirnfläche eine Abstützfläche 7 ausbilden. Die Figur 9 zeigt, dass die Höhe H₁, mit der die Abstützfläche 7 des Abstützkörpers 6 von der Seitenfläche 9' beabstandet ist, dem Höhenmaß H₂' entspricht, welches dem Abstand der Unterseite 4" und der Stirnseite 32 eines Stopfens 12, der in eine Öffnung 27 eingesteckt ist, wenn der Haltekörper 4 ohne die in der Figur 1 dargestellten Hilfsbacken 33 verwendet wird, die eine Öffnung aufweisen, durch die der Schaft 3 hindurchragt, um die Hilfsbacke 33 an die Werkplatte 1 zu fesseln. Insofern kann der in der Figur 3 dargestellte Haltekörper 4 eine verkürzte Länge aufweisen.

Es ist somit bevorzugt vorgesehen, dass der vertikale Überstand des in eine Bohrung einer Werkplatte 1 eingesetzten Haltekörpers 4 gleich groß ist mit dem vertikalen Überstand eines in eine Bohrung 2 der Werkplatte 1 eingesteckten Abstützkörpers 6 ist. Ein vom Haltekörper 4 ausgebildete und vom Abstützkörper 6 ausgebildete horizontale Auflagefläche oder ein vom Abstützkörper 6 ausgebildeter Auflagepunkt liegt dann in einer gemeinsamen Ebene, die parallel zur Ebene der Werkplatte 1 verläuft.

In dem Hohlschaft 3 steckt ein von einer Schraube gebildeter Spreizkörper 20. Der Spreizkörper 20 wird insbesondere vom Schraubenkopf ausgebildet. Der Gewindeschaft 21 steckt in der Einschraubhöhlung 22 ein. Es kann sich dabei um ein selbstschneidendes Gewinde handeln, das sich in den Kunststoff der Einschraubhöhlung 22 einschneidet. Es ist aber auch vorgesehen, dass die Einschraubhöhlung 22 ein vorgeschnittenes Gewinde aufweist.

Der Spreizkörper 20 besitzt einen Kopfabschnitt, der vollständig in dem durchmessergrößten Abschnitt 24 einsteckt. An den Kopfabschnitt des Spreizkörpers 20 schließt sich ein Halsabschnitt an, der Spreizflanken 23 ausbildet. Die Spreizflanken 23 verlaufen auf der Fläche eines Kegelstumpfes. Sie liegen flächig an den Schrägflanken 19 an.

Durch Drehen des Spreizkörpers 20, was mit Hilfe eines Werkzeuges erfolgen kann, schraubt sich der Spreizkörper 20 und insbesondere der Gewindeschaft 21 in die Höhlung des Schaftes 3 hinein, so dass die Spreizflanken 23 spreizend gegen die Spreizzungen 18 treten. Hierzu besitzt der Schraubenkopf eine Schraubwerkzeugeintrittsöffnung.

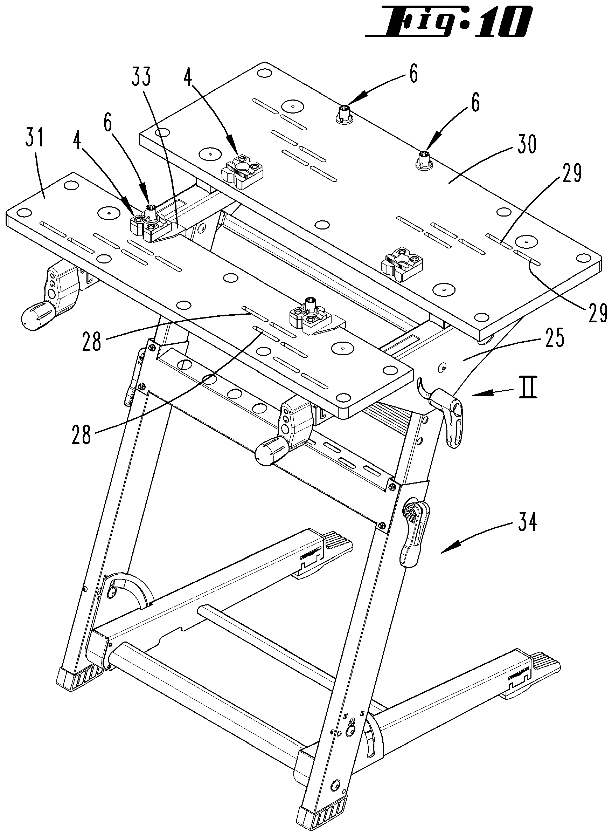

Die Figur 1 zeigt den oberen Abschnitt eines Werktisches, wie er im Detail in der Figur 10 dargestellt ist. Ein derartiger Werktisch ist auch aus der DE 10 2006 024 291 DE bekannt. Der in den Figuren 1 und 10 dargestellte Werktisch besitzt ein Untergestell 34, welches Beine aufweist, die sich am Boden abstützen. Am Ende eines höhenverstellbaren Stützorgans sitzt ein Träger 25, auf dem eine Spannbacke 30 befestigt ist. Die Spannbacke 30 besitzt eine Oberseite, die sich in einer Horizontalebene erstreckt. Die Spannbacke 30 ist sowohl in Vertikalrichtung als auch in Horizontalrichtung fest mit dem Träger verbunden.

Eine zweite Spannbacke 31 ist ebenfalls auf dem Träger 25 angeordnet. Sie ist gegenüber der festen Spannbacke 30 mit Hilfe eines Spindeltriebs verstellbar. Durch Drehen der Spindel mittels einer Kurbel kann der Abstand der Spannbacke 31 zur Spannbacke 30 verstellt werden. Die Gewindegänge der Spindel haben eine derartige Gewindesteigung, dass die bewegliche Spannbacke 30 in Selbsthemmung gehalten ist.

Jede der beiden Spannbacken 30, 31 besitzt mehrere Langlöcher 29. Die Langlöcher 29 bilden Längsschlitze aus, die sich in Richtung quer zur Verstellrichtung erstrecken. Es sind mehrere in Erstreckungsrichtung der Längsschlitze hintereinanderliegende Längsschlitze 28, 29 vorgesehen. Es liegen darüber hinaus mehrere Längsschlitze 29, 28 auch in Verstellrichtung nebeneinander. Es sind insgesamt vier Gruppen bestehend aus mehreren sowohl in Verstellrichtung als auch in Richtung quer dazu nebeneinander angeordnete Längsschlitze 28, 29 vorgesehen. Die Längsschlitze 28, 29 sind Befestigungsschlitze zum Befestigen einer Montageplatte eines elektrisch angetriebenen Werkzeuges. Die Befestigung kann mit Schrauben erfolgen. Die Schrauben durchgreifen dabei die Längsschlitze 28, 29, um die Montageplatte oder Montageplatte haltende Klemmpratzen an den Spannbacken 30, 31 zu fixieren. Unterschiedliche Längen der Montageplatte werden dadurch ausgeglichen, dass sich die Längsschlitze in Richtung quer zur Verstellrichtung erstrecken. Unterschiedliche Breiten der Montageplatten werden dadurch ausgeglichen, dass der Abstand der Spannbacken 31, 30 einstellbar ist. Der Antriebsmotor des elektrischen Werkzeuges kann dann zwischen den beiden Spannbacken 30, 31 liegen. Es kommt insbesondere eine Montageplatte in Rechteckform zu Anwendung, die in Ihren vier Eckbereichen mittels Schrauben an den beiden Backen 30, 31 befestigt werden kann, wobei jede Schraube einen ihr zugeordneten Längsschlitz 29, 28 durchgreift.

Die Figur 10 zeigt eine rückwärtige Spannbacke 30, die Bohrungen 2 aufweist. In zwei der Bohrungen stecken Haltekörper 4. Die Haltekörper 4 liegen unmittelbar auf der Oberfläche der Spannbacke 30. In zwei weiteren Bohrungen stecken Abstützkörper 6. Die Haltekörper 4 und die Abstützkörper 6 bilden Stützflächen aus, auf denen ein Werkstück abgelegt werden kann. Die Stützflächen liegen in einer gemeinsamen Ebene, die parallel zur Oberseite der Spannbacke 30 verläuft. Die Abstützkörper 6 bzw. die Haltekörper 4 halten das Werkstück somit in einer Parallelebene zur Werkplatte.

**Bezugszeichenliste**

| | | | |
|---|---|---|---|
| 1 | Werkplatte | 22 | Einschraubhöhlung |
| 2 | Bohrung | 23 | Spreizflanken |
| 3 | Schaft | 24 | Zone |
| 4 | Haltekörper | 25 | Träger |
| 4' | Oberseite | 26 | Freischnitt |
| 4" | Unterseite | 27 | Öffnung |
| 5 | Öffnung | 28 | Schlitz |
| 6 | Abstützkörper | 29 | Schlitz |
| 7 | Abstützfläche | 30 | Spannbacke |
| 8 | Abstützspitze | 31 | Spannbacke |
| 9 | Auflageabschnitt | 32 | Anlageabschnitt |
| 9' | Seitenfläche | 33 | Hilfsbacke |
| 9" | Seitenfläche | 34 | Untergestell |
| 10 | Klemmabschnitt | | |
| 11 | Höhlung | a₁ | Abstand |
| 12 | Stopfen | a₂ | Abstand |
| 13 | innere Rippe | d₁ | große Halbachse |
| 14 | Rippe | d₂ | kleine Halbachse |
| 15 | Zylinderabschnitt | H₁ | Höhe |
| 15' | Zylinderabschnitt | H₂ | Höhe |
| 16 | Boden | H₂' | Höhe |
| 17 | Vertiefung | | |
| 18 | Zunge | | |
| 19 | Schrägflanke | | |
| 20 | Spreizkörper | | |
| 21 | Gewindeschaft | | |

## Patentansprüche

1. Vorrichtung zur Halterung eines Werkstücks mit einem in Achsrichtung in eine Bohrung (2) einer Werkplatte (1) einsetzbaren Schaft (3) und einem sich daran anschließenden Haltekörper (4) der im montierten Zustand auf einer Werkplatte aufliegen kann, wobei der Haltekörper (4) auf seiner vom Schaft (3) weg weisenden Seite (4') eine Öffnung (5) aufweist, in der ein Abstützkörper (6) steckt, **dadurch gekennzeichnet, dass** die Öffnung (5) einen unrunden Grundriss, insbesondere einen elliptischen oder ovalen Grundriss aufweist und ein in die Öffnung (5) hineinragender Klemmabschnitt (10) des Abstützkörpers (6) Klemmflanken aufweist, die durch Verdrehen in eine Klemmstellung zur Innenwandung der Öffnung (9) bringbar sind.

2. Vorrichtung nach Anspruch 1, **dadurch gekennzeichnet, dass** der Abstützkörper (6) um 180 Grad umwendbar in der Öffnung (5) steckt und zwei voneinander weg weisende Abstützenden (7, 8) aufweist, von denen eines in die Öffnung hinein und das Andere aus der Öffnung herausragt.

3. Vorrichtung nach Anspruch 2, **dadurch gekennzeichnet, dass** die beiden Abstützenden (7, 8) voneinander verschieden ausgestaltet sind, wobei insbesondere vorgesehen ist, dass ein Abstützende eine Abstützfläche (7) und das andere Abstützende eine Abstützspitze (8) ausbildet.

4. Vorrichtung nach einem der vorhergehenden Ansprüche, **dadurch gekennzeichnet, dass** der Abstützkörper (6) einen insbesondere ringförmigen Auflageabschnitt (9) ausbildet, der auf der Seite (4') des Haltekörpers (4) aufliegt und von dem insbesondere beidseitig ein Klemmflanken aufweisender Klemmabschnitt (10) abragt.

5. Vorrichtung nach Anspruch 4, **dadurch gekennzeichnet, dass** der Klemmabschnitt (10) von Rippen ausgebildet ist, die auf einer Grundrisslinie verlaufende Klemmflanken ausbilden, wobei die Grundrisslinie im Wesentlichen der Grundrisslinie der Öffnung (5) entspricht.

6. Vorrichtung nach einem der vorhergehenden Ansprüche, **dadurch gekennzeichnet, dass** der Abstützkörper (6) und der Haltekörper (4) eine derartige vertikale Erstreckungslänge besitzen, dass ein vom Abstützkörper (6) und Haltekörper (4) getragenes Werkstück in einer Parallelebene zur Werkplatte (1) liegt, wobei insbesondere vorgesehen ist, dass die Höhe (H₁), mit der eine Abstützfläche (7) den Rand der Öffnung (5) überragt einer Höhe (H₂, H₂') entspricht, mit der der Haltekörper (4) insbesondere mit einem Anlageabschnitt (32) die Oberseite der Werkplatte (1) überragt.

7. Vorrichtung nach einem der vorhergehenden Ansprüche, **dadurch gekennzeichnet, dass** der in einer Axialrichtung in eine Bohrung (2) einer Werkplatte (1) einsteckbare hohle Schaft (3) an seinem freien Ende freigeschnittene Zungen aufweist, die mittels eines im Schaft (3) angeordneten Spreizkörper (20) in Radialrichtung nach außen gegen die Wandung der Bohrung (2) abspreizbar sind.

8. Vorrichtung nach Anspruch 7, **dadurch gekennzeichnet, dass** der Spreizkörper (20) einen Gewindeschaft (21) ausbildet, mit dem er in eine Einschraubhöhlung (22) des Spannklotzes eingeschraubt ist, so dass der Spreizkörper (20) durch eine Axialdrehung in Achsrichtung verlagerbar ist.

9. Vorrichtung nach einem der Ansprüche 7 bis 8, **dadurch gekennzeichnet, dass** der Spreizkörper (20) schräg zur Axialen verlaufende, insbesondere auf einer Kegelmantelfläche liegende Spreizflanken (23) aufweist, die sich an Schrägflanken (19), die insbesondere auf einer Innenkegelstumpf-Mantelfläche verlaufen, abstützen.

10. Vorrichtung nach einem der Ansprüche 7 bis 9, **dadurch gekennzeichnet, dass** die Einschraubhöhlung (22) von einem durchmesserverminderten Fortsatz der Höhlung des Schaftes (3) ausgebildet ist.

## Claims

1. Device for holding a workpiece, said device comprising a shaft (3) that can be inserted in the axial direction into a hole (2) in a work plate (1), and a holding element (4) which is connected to said shaft and can rest on a work plate when assembled, the holding element (4) comprising, on the side (4') thereof facing away from the shaft (3), an opening (5) in which a support element (6) is placed, **characterised in that** the opening (5) is non-circular in plan view, in particular is elliptical or oval in plan view, and a clamping portion (10) of the support element (6) that protrudes into the opening (5) has clamping sides which, by being rotated, can be brought into a clamping position with respect to the inner wall of the opening (9).

2. Device according to claim 1, **characterised in that** the support element (6) is placed in the opening (5) such that said element can be turned by 180°, and comprises two support ends (7, 8) which point away from one another, one of which ends protrudes into the opening and the other of which protrudes out of the opening.

3. Device according to claim 2, **characterised in that** the two support ends (7, 8) are designed to be different from one another, in particular one support end forming a support surface (7) and the other support end forming a support tip (8).

4. Device according to any of the preceding claims, **characterised in that** the support element (6) forms an in particular annular contact portion (9) which rests on the side (4') of the holding element (4) and from which a clamping portion (10) having clamping sides projects in particular on either side.

5. Device according to claim 4, **characterised in that** the clamping portion (10) is formed by ribs which form clamping edges extending on a plan-view outline, the plan-view outline substantially corresponding to the plan-view outline of the opening (5).

6. Device according to any of the preceding claims, **characterised in that** the support element (6) and the holding element (4) have a vertical extension length such that a workpiece supported by the support element (6) and the holding element (4) is in a parallel plane with respect to the work plate (1), in particular the height (H₁) at which one support face (7) projects beyond the edge of the opening (5) corresponding to a height (H₂, H₂') at which the holding element (4) projects beyond the upper face of the work plate (1), in particular by means of a contact portion (32).

7. Device according to any of the preceding claims, **characterised in that** the hollow shaft (3), which can be inserted in an axial direction into a hole (2) in a work plate (1), comprises, at its free end, tabs which have been cut free and can be spread apart outwards in the radial direction against the wall of the hole (2) by means of a spreader (20) arranged in the shaft (3).

8. Device according to claim 7, **characterised in that** the spreader (20) forms a threaded shaft (21), by means of which said spreader is screwed into a screw-in cavity (22) of the clamping block, such that the spreader (20) can be displaced in the axial direction by means of an axial rotation.

9. Device according to either claim 7 or claim 8, **characterised in that** the spreader (20) comprises spreading edges (23) which extend obliquely to the axial direction and in particular lie on a cone-envelope surface and are supported on oblique edges (19) which extend in particular on an inner lateral surface of a truncated cone.

10. Device according to any of claims 7 to 9, **characterised in that** the screw-in cavity (22) is formed by a reduced-diameter extension of the cavity of the shaft (3).

## Revendications

1. Dispositif destiné à maintenir une pièce d'oeuvre avec un arbre (3) pouvant être inséré axialement dans un alésage (2) d'une platine (1) et un corps de maintien (4) s'y rattachant qui peut, à l'état monté, reposer sur une platine, dans lequel le corps de maintien (4) présente une ouverture (5) sur son côté (4') opposé à l'arbre (3) dans laquelle est inséré un corps de support (6), **caractérisé en ce que** l'ouverture (5) présente un contour de base non circulaire, en particulier un contour de base elliptique ou ovale, et un tronçon de serrage (10) du corps de support (6) faisant saillie dans l'ouverture (5) présente des flancs de serrage qui sont amenés par rotation dans une position de serrage par rapport à la paroi intérieure de l'ouverture (9).

2. Dispositif selon la revendication 1, **caractérisé en ce que** le corps de support (6) est inséré dans l'ouverture (5) en pouvant être tourné sur 180 degrés, et comporte deux extrémités de support (7, 8) opposées l'une à l'autre, dont l'une fait saillie dans l'ouverture et dont l'autre fait saillie hors de l'ouverture.

3. Dispositif selon la revendication 2, **caractérisé en ce que** les deux extrémités de support (7, 8) sont configurés différemment l'une de l'autre, dans lequel il est prévu qu'une extrémité de support forme une surface de support (7) et que l'autre extrémité de support forme une pointe de support (8).

4. Dispositif selon l'une des revendications précédentes, **caractérisé en ce que** le corps de support (6) forme un tronçon d'appui (9) en particulier de forme annulaire, qui repose sur le côté (4') du corps de maintien (4) et à partir duquel, en particulier des deux côtés, fait saillie un tronçon de serrage (10) présentant des flancs de serrage.

5. Dispositif selon la revendication 4, **caractérisé en ce que** le tronçon de serrage (10) est formé par des nervures qui forment des flancs de serrage s'étendant sur une ligne de contour de base, dans lequel la ligne de contour de base correspond sensiblement à la ligne de contour de base de l'ouverture (5).

6. Dispositif selon l'une des revendications précédentes, **caractérisé en ce que** le corps de support (6) et le corps de maintien (4) ont une longueur d'extension verticale telle qu'une pièce d'oeuvre supportée par le corps de support (6) et le corps de maintien (4) repose dans un plan parallèle à la platine (1), dans lequel il est prévu en particulier que la hauteur (H₁) avec laquelle une surface de support (7) dépasse du bord de l'ouverture (5) corresponde à une hauteur (H₂, H₂') avec laquelle le corps de maintien (4) dépasse, en particulier avec un tronçon d'appui (32), du côté supérieur de la platine (1).

7. Dispositif selon l'une des revendications précédentes, **caractérisé en ce que** l'arbre creux (3) pouvant être inséré dans une direction axiale dans un alésage (2) d'une platine (1) présente à son extrémité libre des languettes libérées par découpage qui, au moyen d'un corps d'écartement (20) agencé dans l'arbre (3), peuvent être écartées dans la direction radiale vers l'extérieur contre la paroi de l'alésage (2).

8. Dispositif selon la revendication 7, **caractérisé en ce que** le corps d'écartement (20) forme une tige filetée (21) avec laquelle il est vissé dans une cavité de vissage (22) de la cale de serrage de manière à ce que le corps d'écartement (20) peut être déplacé axialement par l'intermédiaire d'une rotation axiale.

9. Dispositif selon l'une des revendications 7 à 8, **caractérisé en ce que** le corps d'écartement (20) présente des flancs d'écartement (23) s'étendant obliquement par rapport à l'axe, en particulier disposés sur une surface d'enveloppe conique, qui s'appuient sur des flancs inclinés (19) qui s'étendent en particulier sur une surface d'enveloppe intérieure tronconique.

10. Dispositif selon l'une des revendications 7 à 9, **caractérisé en ce que** la cavité de vissage (22) est formée par un prolongement de diamètre réduit de la cavité de l'arbre (3).
